(19) **Europäisches Patentamt**
**European Patent Office**
**Office européen des brevets**

(11) **EP 4 408 795 B1**

(12) **EUROPEAN PATENT SPECIFICATION**

(45) Date of publication and mention
of the grant of the patent:
**22.01.2025 Bulletin 2025/04**

(21) Application number: **23808807.4**

(22) Date of filing: **20.11.2023**

(51) International Patent Classification (IPC):
*C01B 15/013* (2006.01)    *B01J 20/26* (2006.01)
*B01J 39/04* (2017.01)    *B01J 49/50* (2017.01)
*B01J 49/60* (2017.01)

(52) Cooperative Patent Classification (CPC):
**C01B 15/0135; B01J 20/267; B01J 20/3425;
B01J 20/3475**

(86) International application number:
**PCT/EP2023/082331**

(87) International publication number:
**WO 2024/132319 (27.06.2024 Gazette 2024/26)**

(54) **PROCESS FOR THE PURIFICATION OF HYDROGEN PEROXIDE**

VERFAHREN ZUR REINIGUNG VON WASSERSTOFFPEROXID

PROCÉDÉ DE PURIFICATION DE PEROXYDE D'HYDROGÈNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.12.2022 EP 22216112**

(43) Date of publication of application:
**07.08.2024 Bulletin 2024/32**

(73) Proprietor: **Solvay SA
1120 Bruxelles (BE)**

(72) Inventors:
• **DIAZ-MAROTO CARPINTERO, Javier
1120 Brussels (BE)**
• **OWEN, Robert
1120 Brussels (BE)**
• **FORMIGA, Nuno
1120 Brussels (BE)**
• **WILLSON, Andrew
1120 Brussels (BE)**

(74) Representative: **Kraus & Lederer PartGmbB
Thomas-Wimmer-Ring 15
80539 München (DE)**

(56) References cited:
**CN-U- 208 554 226    JP-A- H1 099 603
US-A- 6 054 109    US-A1- 2002 020 671**

**Description**

This application claims priority filed on December 22, 2022 in Europe with Nr 22216112.7.

**TECHNICAL FIELD**

The present invention relates to a new process configuration for the purification of an aqueous hydrogen peroxide ($H_2O_2$) solution containing organic impurities.

**TECHNICAL BACKGROUND**

Hydrogen peroxide is one of the most important inorganic chemicals to be produced worldwide. Its industrial applications include textile, pulp and paper bleaching, organic synthesis (propylene oxide, caprolactam), the manufacture of inorganic chemicals and detergents, environmental and other applications.

Synthesis of hydrogen peroxide is predominantly achieved by using the Riedl-Pfleiderer process (originally disclosed in U.S. Pat. Nos. 2,158,525 and 2,215,883), also called anthraquinone loop process or AO (auto-oxidation) process.

The well-known process is a cyclic process taking an organic anthraquinone dissolved in solvent and circulating this "Working Solution - WS" mix around the plant.

The first step of the AO process is the chemical reduction of two main organic species (useful quinone(s)) (2-alkylanthracene-9,10-dione and/or 6-alkyl-1,2,3,4-tetrahydroanthracene-9,10-dione into the corresponding hydroquinone(s) (2-alkylanthracene-9,10-diol and/or 6-alkyl-1,2,3,4-tetrahydroanthracene-9,10-diol) using hydrogen gas and a catalyst. The mixture of organic solvents, hydroquinone and quinone species is then separated from the catalyst and the hydroquinone species are oxidized using oxygen, air or oxygen-enriched air thus regenerating the quinone(s) with simultaneous formation of hydrogen peroxide.

The organic solvent is typically a mixture of two solvents, one being a good solvent for dissolving the quinone(s) (generally a non-polar solvent, for instance a mixture of aromatic compounds) and the other being a good solvent for dissolving the hydroquinone(s) (generally a polar solvent, for instance a long chain alcohol). Hydrogen peroxide is then typically extracted in an extraction column with water and recovered in the form of a crude aqueous hydrogen peroxide solution, and the working solution is returned to the hydrogenator to complete the loop. The typical arrangement of a standard hydrogen peroxide plant can therefore be summarised as starting with a hydrogenator, followed by an oxidation column, followed by an extraction column. The hydrogen peroxide is usually extracted from the working solution in a flow of demineralised water from the extraction column.

Although the extraction process is highly efficient in separating the aqueous phase containing hydrogen peroxide from the organic phase containing quinones, solvents and degradants, some of those organic species remain in the aqueous phase and generally are not desirable to the final user because of the impact on the final product quality and yield. Usually, the concentration of those organic impurities is in the range of hundreds or tens of mg per kilogram in an aqueous solution of hydrogen peroxide having the concentration of 20 to 70% by weight. Those organic impurities are generally measured and referred as Total Organic Carbon (TOC).

In the prior art several operations are described in order to decrease the organics content in the aqueous phase, which can be used alone or in combination with for example distillation, gas stripping, reverse osmosis, resin adsorption, etc.

In EP 0930269 A1 a purification process is described whereby a reverse osmosis membrane is used to remove the bulk of contaminating species from hydrogen peroxide. In this case the permeate from the reverse osmosis operation present a low TOC content but inherently generates a retentate stream with concentrated TOC which is not desirable for the final customer and entails further treatment to decrease the TOC.

In the prior art, a general solution for purifying hydrogen peroxide produced by an AO-process is the use of an adsorption resin due to the performance reliability and low operating cost associated to the potential regeneration of such a resin once saturated.

For example, EP 1520839 A1 refers to a process for purification of hydrogen peroxide by the use of reverse osmosis in combination with an adsorption resin. However, this process does not take into a count the regeneration of the used resin, and thus the process provides unwanted high amount of resin waste.

The US-Patent No. 6896867 discloses a process for producing a purified aqueous hydrogen peroxide solution where an adsorption resin is used and regenerated. In this case the resin is regenerated in the same vessel, generating time loss, quality loss and potentially a dangerous and unwanted scenario where peroxide is mixed with the regenerant.

CN 208554226 discloses a device for purification of electronic-grade hydrogen peroxide where an adsorption resin is used in one vessel and regenerated with a regenerant in a separated vessel. This process allows the continuous operation of the process. However, one of the problems of this process is that the hydrogen peroxide and/or the regenerant may accumulate in the macro-porous resin structure. Furthermore, the transfer of the resin from the purification vessel to the regeneration vessel is carried out under vacuum. The vacuum transfer bears the risk that air can enter the system, which leads to an unwanted safety risk scenario where typical regenerant (for example, methanol) vapours are mixed with air in a confined space and therefore lead to an explosion. It is well known in the art that mixtures of organic vapors (also called fuel) and air/oxygen (oxidant) form a combustible mixture can lead to fire or an explosion when in a confined space. In addition, the hydrogen peroxide (oxidant) and the regenerant accumulated in the macro-porous resin structure may lead to a formation of an explosive mixture in a confined space and therefore to an explosion.

In other words, it is difficult to reduce the TOC levels of hydrogen peroxide solutions with the aid of adsorption resins due to the inherent reactivity of hydrogen peroxide when it comes in contact with resins, and the hazardous scenario when the hydrogen peroxide comes in contact with organic regenerants. For this reason, not only the production performance of the purification process but also the safe implementation of said process is of outmost importance.

Therefore, object of the invention was to provide a purification process for hydrogen peroxide solution from an autoxidation (AO) process that overcomes the disadvantageous of the processes known in the art, in particular to provide a process for the purification of a hydrogen peroxide solution from an AO process with adsorption resins having an improved production performance, i.e. providing a hydrogen peroxide solution with a low TOC content, and additionally can be performed safely.

## SUMMARY OF THE INVENTION

The present invention relates to a process for the purification of an aqueous hydrogen peroxide solution containing organic impurities, comprising the following steps:

(a) contacting the aqueous hydrogen peroxide solution with an adsorption resin in an adsorption vessel to remove at least part of the organic impurities and to obtain a purified aqueous hydrogen peroxide solution which is collected outside the adsorption vessel,

(b) subsequently adding a liquid, preferably demineralised water, to the adsorption vessel so that a suspension of the resin flows out of the adsorption vessel through a first pipeline into a regeneration vessel with a pressure, which is higher in the adsorption vessel and the first pipeline than outside of the adsorption vessel and the first pipeline;

(c) treating the resin in the regeneration vessel with an organic regenerant in order to obtain a regenerated resin,

(d) returning the regenerated resin through a second pipeline to the adsorption vessel by using a liquid, preferably demineralised water, with a pressure, which is higher in the regeneration vessel and the second pipeline than outside the regeneration vessel and the second pipeline.

## DETAILED DESCRIPTION OF THE INVENTION

Before the purification process of the invention will be described in detail, it is to be understood that this invention is not limited to specific process conditions described herein, since such conditions may, of course, vary.

It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "a compound" means one compound or more than one compound.

The terms "containing", "contains" and "contained of" as used herein are synonymous with "including", "includes" or " comprising", "comprises", and are inclusive or open-ended and do not exclude additional, non-recited members, elements or process steps. It will be appreciated that the terms "containing", "contains", "comprising", "comprises" and "comprised of" as used herein comprise the terms "consisting of", "consists" and "consists of".

Throughout this application, the term "about" is used to indicate that a value includes the standard deviation of error for the device or method being employed to determine the value.

As used herein, the term "average" refers to number average unless indicated otherwise.

As used herein, the terms "% by weight", "wt.-%", "weight percentage", or "percentage by weight" are used interchangeably. The same applies to the terms "% by volume", "vol.- %", "vol. percentage", or "percentage by volume", or "% by mol", "mol- %", "mol percentage", or "percentage by mol".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

Should the disclosure of any patents, patent applications, and publications conflict with the description of the present application to the extent that it may render a term unclear, the present description shall take precedence.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and from different embodiments, as would be understood by those in the art.

In order to overcome the disadvantageous of the purification processes for the purification of an aqueous hydrogen peroxide solution containing organic impurities as known in the prior art and discussed above, the present invention provides a process comprising the following steps:

(a) contacting the aqueous hydrogen peroxide solution with an adsorption resin in an adsorption vessel to remove at least part of the organic impurities and to obtain a purified aqueous hydrogen peroxide solution which is collected outside the adsorption vessel,
(b) subsequently adding a liquid, preferably demineralised water, to the adsorption vessel so that a suspension of the resin flows out of the adsorption vessel through a first pipeline into a regeneration vessel with a pressure, which is higher in the adsorption vessel and the first pipeline than outside of the adsorption vessel and the first pipeline;
(c) treating the resin in the regeneration vessel with an organic regenerant in order to obtain a regenerated resin,
(d) returning the regenerated resin through a second pipeline to the adsorption vessel by using a liquid, preferably demineralised water, with a pressure, which is higher in the regeneration vessel and the second pipeline than outside the regeneration vessel and the second pipeline.

Hence, the process of the invention comprises four main method steps: A purification step, a transfer step, a regeneration step and a recycling step, whereby the resin adsorption takes place in one vessel, the resin regeneration takes place in another separate vessel, and the resin is transferred in slurry form with the aid of two pipelines between both vessels with a pressure, which is higher in the vessels and pipelines than outside these vessels and pipelines.

According to the invention, it is preferred that the purification vessel and the regeneration vessel have nearly similar volumes, more preferably have the same volume.

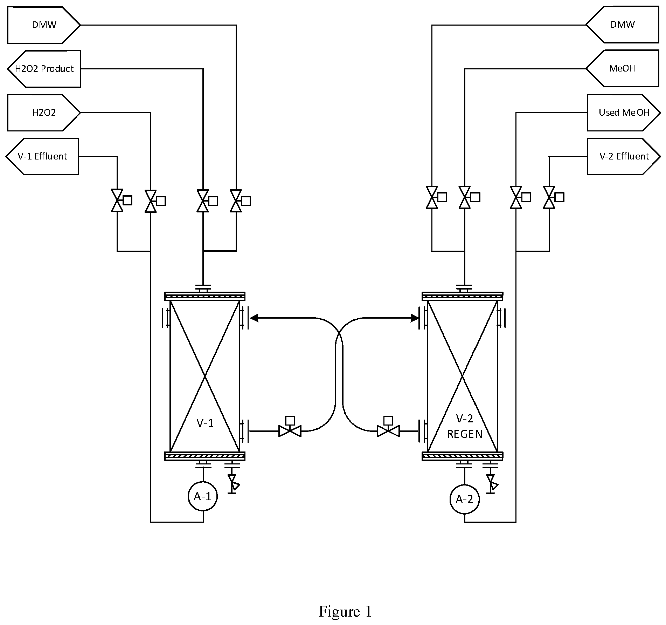

In Figure 1 a flow scheme is presented, which shows schematically the process configuration according to the invention;

Legend:

| | |
|---|---|
| DMW: | demineralized water; |
| H2O2: | hydrogen peroxide inlet; |
| H2O2 | Product: hydrogen peroxide outlet; |
| V-1: | adsorption vessel; |
| V-1 Effluent: | hydrogen peroxide and demineralized water effluent; |
| MeOH: | regenerant inlet; |
| Used MeOH: | used regenerant outlet; |
| V-2 Effluent: | regenerant and demineralized water effluent; |
| A-1: | density analysis point in V-1; |
| A-2: | density analysis point in V-2. |

The hydrogen peroxide purification vessel (V-1) used in the process of the invention is preferably a column comprising a purification column body, and a purification column upper head and a purification column lower head that are arranged at the upper and lower ends of the purification column body.

The purification column body has an upper part, which is preferably provided with a filter, a membrane and/or a liquid distributor, more preferably the filter, the membrane and/or the liquid distributor is located directly below the purification column upper head. The purification upper head has preferably an inlet for demineralized water (DMW of Figure 1) used in the washing step as described below, and an outlet for the purified hydrogen peroxide solution product (H2O2 product of Figure 1). Both, the inlet and the outlet, are each connected with a delivery pipeline. In one embodiment of the invention, as depicted in Figure 1, the inlet and outlet of the purification column upper head may be the same and thus the purification column upper head is only connected with one delivery pipeline, which is spilt outside the vessel (column) into two delivery pipelines, one for delivering the demineralized water and one for delivering the purified hydrogen peroxide product.

Furthermore, the purification column body has a lower part, which is preferably provided with a filter, a membrane and/or a liquid distributor, more preferably the filter, the membrane and/or the liquid distributor is located directly above the purification column lower head. The purification lower head has preferably an inlet for the hydrogen peroxide solution (H2O2 of Figure 1), which should be purified, and an outlet for the mixture of hydrogen peroxide and demineralized water effluent (V-1 Effluent of Figure 1) obtained in the washing step as described below. Both, the inlet and the outlet, are each connected with a delivery pipeline. In an embodiment of the invention, as depicted in Figure 1, the inlet and outlet of the purification column lower head may be the same and thus the purification column lower head is only connected with one delivery pipeline, which is spilt outside the vessel (column) into two delivery pipelines, one for delivering the hydrogen peroxide and one for delivering the mixture of hydrogen peroxide and demineralized water effluent.

The regeneration vessel (V-2 of Figure 1) is also preferably a column comprising a regeneration column body, and a regeneration column upper head and a regeneration column lower head that are arranged at the upper and lower ends of the regeneration column body.

The regeneration column body has an upper part, which is provided with a filter, a membrane and/or a liquid distributor, more preferably the filter, the membrane and/or the liquid distributor is located directly below the regeneration column upper head. The regeneration column upper head has preferably an inlet for demineralized water (DMW of Figure 1) used in the washing step as described below, and an inlet for the regenerant (MeOH of Figure 1). Both inlets are each connected with a delivery pipeline. In an embodiment of the invention, as depicted in Figure 1, the regeneration column upper head may have only one inlet and thus the regeneration column upper head is only connected with one delivery pipeline, which is spilt outside the vessel (column) into two delivery pipelines, one for delivering the demineralized water and one for delivering the regenerant.

Furthermore, the regeneration column has a lower part, which is preferably provided with a filter, a membrane and/or a liquid distributor, more preferably the filter, the membrane and/or the liquid distributor is located directly above the regeneration column lower head. The regeneration lower head has preferably an outlet for the used regenerant (Used MeOH of Figure 1) and an outlet for the mixture of regenerant and demineralized water effluent (V-2 Effluent of Figure 1) obtained in the washing step as described below. Both outlets are each connected with a delivery pipeline. In an embodiment of the invention, the regeneration column lower head may have only one outlet, as depicted in Figure 1, and thus the regeneration column lower head is only connected with one delivery pipeline, which is spilt into two delivery pipelines outside the vessel (column), one for delivering the used regenerant and one for delivering the mixture of regenerant and demineralized water effluent.

The filters, membranes and/or liquid distributors present in the vessels as described above ensure that the adsorption resin used in the process of the invention is kept in the vessels as long as necessary for completely carrying out the purification and regeneration step.

Additionally, according to the invention, the adsorption vessel is provided with a pipeline (first pipeline) that connects the adsorption vessel with the regeneration vessel. This pipeline is preferably attached on the purification column body directly above the filter, the membrane and/or the liquid distributor located in the lower part of the purification column body, and preferably attached on the regeneration column body directly below the filter, the membrane and/or the liquid distributor located in the upper part of the regeneration column body.

Furthermore, according to the invention, a second pipeline is used, which connects also both vessels. The second pipeline is preferably attached on the regeneration column body directly above the filter, the membrane and/or liquid distributor located in the lower part of the regeneration column body, and preferably attached on the purification column body directly below the filter, the membrane and/or liquid distributor located in the upper part of the purification body.

All inlets, outlets and pipelines used in the vessel configuration of the invention as described above are equipped with vales to control the flow of the liquid streams used in the purification process of the invention.

In a preferred embodiment of the invention, at the end of each process stage, a washing step with demineralized water is carried out followed by a concentration analysis, which ensures that no hydrogen peroxide nor regenerant is transferred between the two vessels.

One of the essential characteristics of the present invention resides on the improved ability to remove impurities from an aqueous hydrogen peroxide solution (process step (a) of the invention). These contaminants can for instance result from the production process of the hydrogen peroxide. In the case of the autoxidation (AO) process for the production of hydrogen peroxide, the contaminants can be organic hydrocarbon compounds containing functional groups such as alcohols, aldehydes and carboxylic acids as well as alkylated aromatics. Diisobutyl carbinol would be a typical alcohol and tetra methyl benzene would be a typical alkylated aromatic.

The adsorption resin used in the invention is preferably a non-ion-exchanging adsorbent, in particular a polymeric styrene resin cross-linked with divinylbenzene, which is preferably free of components that can be washed out, such as monomers and polymerization adjuvants. In general, non-ion-exchanging adsorbents adsorb and release ionic species through hydrophobic and polar interactions, i.e., they have high affinity for hydrophobic organics substance but a low affinity for hydrophilic materials such as water or $H_2O_2$. The polymeric styrene resins cross-linked with divinylbenzene, which are preferably used in the process of the invention, can be obtained by suspension polymerization of styrene with divinylbenzene, and have non-ionic functional groups and their adsorptive properties arise from the macroreticular structure, range of pore sizes, great surface area, and aromatic nature of this surface. The non-ion-exchanging adsorbents, in particular the styrene-divinylbenzene copolymer adsorbents, are therefore clearly distinct in this regard from cation and anion exchange resins, which due to their functional groups are very sensitive to oxidation and therefore when they are used for purifying hydrogen peroxide, they must be handled with special care (for example by operating at low temperatures such as 5 to 10 °C, and low hydrogen peroxide concentration such as 25 to 35 wt.-%). In contrast thereto, non-ion-exchanging adsorbents are stable against oxidation and can be used even at ordinary ambient temperatures such as, for example, 15 to 35 °C, most preferably 20 to 25 °C. Generally, they are stable at pH from 0 to 14 and at temperatures up to 250 °C.

The styrene-divinylbenzene copolymer adsorbents preferably used in the invention have a white or pale-yellow colour, bead shape and are insoluble in the treating media. Typical properties of these styrene-divinylbenzene copolymer adsorbents are an average particle diameter of 0.5 to 1.3 mm, a water content of 45 to 65 %, a specific gravity from 1.01 to 1.07, and a surface area of 700 up to 1300 $m^2$/g, most preferably above 1000 $m^2$/g. Such styrene-divinylbenzene copolymers are commercially available, for example they are sold by Rohm & Haas under the trademark "Amberlite" as XAD-4®, XAD-2®, or XAD-16®, or sold by Sunresin under the trademark "Seplite" as LX-500®. Other commercially available non-ion-exchanging adsorbents, which may be used in the process of the invention, are acryl resins such as Diaion HP2MG® and Diaion HP2SS®.

According to the invention, it is preferred that before the adsorption resin is used in the purification process of the invention the resin is washed to relieve it from production-induced impurities or preservatives, which can degrade or may influence the quality of hydrogen peroxide solution. This can be done by any method known in the art, for example such a washing step may be carried out with the aid of water, preferably demineralized water, and/or lower alcohol, preferably with pure methanol.

By using non-ion-exchanging adsorbents in the process of the invention, it is possible to purify a hydrogen peroxide solution having a hydrogen peroxide concentration of up to 55 wt.-%. Preferably, the hydrogen peroxide concentration of the solution that should be treated is between 35 and 55 wt.-%, more preferably between 40 and 53 wt.-%, even more preferably between 45 and 52 wt. -%,.

Process step (a) of the invention is preferably a continuous flow process step in which the hydrogen peroxide solution that should be purified is passed through the adsorption vessel. The vessel is preferably a bed column packed with the adsorption resin, in particular when the density of the hydrogen peroxide solution is higher than of the adsorption resin. The hydrogen peroxide solution is preferably introduced into the vessel at the purification column lower head and flows through the vessel (purification column body) preferably with a feed pressure of between 0.5 and 5 barg, more preferably between 0.1 and 3 barg, and preferably with a flow velocity of 0.5 to 8 bed volumes (BV) per hour, more preferably 1 to 3 bed volumes per hour, to leave the purification vessel at the purification column upper head. The bed volume (BV) depends on the bed height of the vessel (column) and the cross-sectional area of the column body and is calculated by the following formula:

$$BV\ (L) = \frac{\text{Bed height (cm)} * \text{Column crossectional area (cm}^2)}{1000}$$

By carrying out process step (a) according the invention it possible to decrease the content of organic impurities, which is usually between 100 and 400 mg/kg, up to 25 mg/kg (measured as Total Organic Carbon (TOC), which is determined by using the combustion catalytic oxidation method as usually used in the technical field of the invention and described below in the examples). Preferably, the purified hydrogen peroxide solution product has a TOC content between 25 and 150 mg/kg, more preferably between 40 and 100 mg/kg, most preferably between 50 and 80 mg/kg, measured by using the combustion catalytic oxidation method. Further reduction of impurities would be possible by increasing the amount of resin used for a fixed peroxide flow rate if required.

Once the resin has been saturated, i.e. the flow of the purified hydrogen peroxide solution leaving the adsorption vessel has a constant TOC content as defined above, the flow of hydrogen peroxide solution into the vessel is stopped, and demineralized water is passed preferably from the purification column upper head of the vessel through the vessel (purification column body) until no detectable amount of hydrogen peroxide is present in the vessel, this is usually the case after 80 minutes up to 100 minutes. Preferably, the washing step is carried out at a temperature of between 10 and 50 °C, more preferably between 15 and 35 °C. Furthermore, the pressure used in this washing step is preferably from 0.01 barg to 10 barg, from 0.05 to 8 barg, more preferably from 0.1 to 5 barg. The demineralised water is passed through the packed bed vessel with a flow of 2 to 5 bed volume per hour, preferably with 3 to 4 bed volume per hour.

The detection of the amount of hydrogen peroxide present in the vessel can be done by measuring the density of the mixture containing hydrogen peroxide and the demineralized water effluent, which leaves the vessel at the purification column lower head (see Figure 1, A-1). It is general knowledge that different materials have different densities and that the density of a mixture of components is a result of the combination of different densities of these components, for example at 20 °C, methanol has a density of 791.4 kg/m$^3$; water has a density of 998.2 kg/m$^3$, and hydrogen peroxide 100% has a density of 1448.0 kg/m$^3$.

In case the measured density of mixture containing hydrogen peroxide and the demineralized water effluent, which leaves the vessel at the purification column lower head, corresponds to the density of the demineralised water, i.e. the density is preferably at 20 °C of 998.2 kg/m$^3$ $\pm$ 0.1 kg/m$^3$, the "mixture" leaving the vessel does no longer contain hydrogen peroxide. Consequently, no hydrogen peroxide is any longer inside the vessel.

At this point, the adsorption resin with demineralized water is transferred from the adsorption vessel towards the regeneration vessel through a first pipeline, which connects the two vessels as described above. This transfer according to process step (b) of the invention is done with a pressure, which is higher inside the adsorption vessel and the first pipeline than outside of the adsorption vessel and first pipeline, i.e. the transfer of the resin in slurry form is a carried out with a positive pressure, preferably with a pressure above ambient pressure, i.e. above 1.01 bara. According to the invention the pressure is preferably between 1.5 and 3 bara. The pressure is created by using a flow of the demineralised water introduced into the adsorption vessel that is between 2 to 6 bed volumes per hour, more preferably between 3 to 5 bed volumes per hour.

The use of a positive pressure avoids air ingress into the system. Furthermore, due to the washing step of the adsorption vessel as described above no hydrogen peroxide is undesirably transferred to the regeneration vessel.

It is state of the art that adsorption resins are generally able to be regenerated. Typical regenerants, which are also used in the regeneration process step of the invention (process step (c)), are lower alcohols such as methanol, ethanol or isopropanol. In a preferred embodiment of the invention, methanol is used as regenerant.

Once the adsorption resin with demineralized water has been completely transferred to the second vessel, the resin, which is preferably bed packed in the regeneration column body, is regenerated with the regenerant passing through the vessel (regeneration column body) preferably from the regeneration column upper head to the regeneration column lower head. The amount of the organic regenerant used in step (c) is at least 1 bed volume, preferably at least 1.5 bed volumes.

According to the invention, it is preferred that the regenerant is used in form of an aqueous solution. This solution is passed from the regeneration column upper head to the regeneration column lower head with a flow of 1 to 4 bed volumes per hour, preferably of 2 to 3 bed volumes per hour. The regeneration process step is carried out for at least 60 minutes, preferably for at least 90 minutes.

The regenerant can be reused after usage by separating the impurities by a suitable technique such as distillation. Therefore, the used regenerant is collected for its distillation and reuse in one or more consecutive cycles (see Used MeOH of Figure 1).

Once the adsorption resin has been regenerated, i.e. is essentially free of organic adsorbed, which is usually the case after 80 minutes, preferably after 60 minutes, the introduction of the regenerant into the regeneration vessel is stopped and demineralized water is passed through the vessel (regeneration column body) downwards until the density of the mixture is that of demineralized water in order to make sure that no regenerant is left inside the vessel, i.e., the density of the "mixture" is at 20 °C of 998.2 kg/m$^3$ $\pm$ 0.1 kg/m$^3$ and is measured after the mixture containing the regenerant and the demineralized water effluent (used MeOH of Figure 1) has left the regeneration vessel at the regeneration column lower head (see Figure 1, A-2). The washing step is preferably carried out at a temperature of between 10 to 50 °C, more preferably of between 15 and 35 °C. Furthermore, the pressure used in this washing step is preferably from 0.01 barg to 10 barg, from 0.05 to 8 barg, more preferably from 0.1 to 5 barg.

At this stage of the process of the invention, the regenerated adsorption resin is transferred with demineralized water towards the first vessel through the second pipeline that additionally connects the two vessels as described above. The resin is then ready to be put in contact again with hydrogen peroxide. This transfer step (process step (d) of the invention) is done with a pressure, which inside the regeneration vessel and the second pipeline higher than outside the regeneration vessel and the second pipeline, i.e. the transfer of the resin in slurry form is a carried out under positive pressure, preferably at a pressure above ambient pressure, i.e. above 1.01 bara, preferably between 1.5 to 3 bara. The pressure is created by using a flow of the demineralised water introduced into the regeneration vessel, which is between 2 to 6 bed volumes per hour, more preferably between 3 to 5 bed volumes per hour.

The process of the invention can be carried in batch mode or continuous mode. In case the process is carried out in continues mode at least two sets of adsorption vessel and regeneration vessel as described above for carrying out the process are used, i.e. the process of the invention is carried out offset in these two sets of adsorption and regeneration vessel to ensure a continuous process.

The present invention is further illustrated by the following examples. It should be understood that the following examples are for illustration purposes only, and are not used to limit the present invention thereto.

**EXAMPLES**

EXAMPLE 1

An aqueous solution of hydrogen peroxide at a concentration of 50% by weight and 295 mg TOC/kg was fed continuously to a vessel containing 268g of the polymeric styrene-divinylbenzene resin at 20°C. The resin used was Seplite LX-500® from Sunresin. At a feed pressure of 0.2 barg, a flow of 1.7L/h (or 4 bed volumes per hour, 4 BV/h) was passed through the packed bed upwards until the resin was saturated reaching an average TOC value of 67 mg/kg. A total of 66.6 kg of purified hydrogen peroxide were collected.

Afterwards, a flow of 4BV of demineralized water was passed through the packed bed downwards for 80 minutes in order to eliminate the hydrogen peroxide hold up, until the density measurement of the outlet stream is that of demineralized water.

The resin is then transferred to a vessel of a similar volume by a connected pipeline using a flow of 4BV/h of demineralized water until there is no resin left in the first vessel.

Thereafter, a flow of 2 BV/h of methanol was passed through the packed bed downwards for 60 minutes in order to regenerate the resin.

Afterwards, a flow of 4BV of demineralized water was passed through the packed bed downwards for 90 minutes in order to eliminate the menthol hold up, until the density measurement of the outlet stream is that of demineralized water.

The resin is then transferred to the first vessel by a connected pipeline using a flow of 4BV/h of demineralized water until there is no resin left in the departing vessel.

The mix of methanol, organics impurities and demineralized water was collected for the reuse of methanol. A batch distillation system composed of 15 theoretical plates was used to separate the mix, obtaining methanol with a purity of 99% by weight able to be reused in the next resin regeneration.

EXAMPLES 2-20

Examples 2-20 were carried out in the same way as Example 1, i.e. the complete cycle was repeated 19 times. All examples show similar performances:

Table 1

| Example | Ex.2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|
| Average TOC outlet (mg/kg) | 65.3 | 66.7 | 65.4 | 74.7 | 65.7 | 71.4 | 64.3 | 82.5 | 65.1 | 66.3 |

Table 2

| Example | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|
| Average TOC outlet (mg/kg) | 75.2 | 74.9 | 77.6 | 75.4 | 90 | 91.5 | 72.9 | 69.8 | 72.7 |

The TOC content was measured by using the combustion catalytic oxidation method as usually used in the technical field of the invention. In this method the samples used for determining the TOC content are heated up to 680 °C in an oxygen-rich environment inside TC combustion tubes filled with a platinum catalyst in order to decompose the organic carbon impurities present in the sample and to convert them into carbon dioxide. The generated carbon dioxide is detected by using an infrared gas analyser. The concentration of the total carbon (TC) in the sample is obtained through comparison with a calibration curve.

**Claims**

1. A process for the purification of an aqueous hydrogen peroxide solution containing organic impurities, comprising the following steps:

(a) contacting the aqueous hydrogen peroxide solution with an adsorption resin in an adsorption vessel to remove at least part of the organic impurities and to obtain a purified aqueous hydrogen peroxide solution which is collected outside the adsorption vessel,

(b) subsequently adding a liquid, preferably demineralised water, to the adsorption vessel so that a suspension of the resin flows out of the adsorption vessel through a first pipeline into a regeneration vessel with a pressure which is higher in the adsorption vessel and the first pipeline than outside of the adsorption vessel and the first pipeline;

(c) treating the resin in the regeneration vessel with an organic regenerant in order to obtain a regenerated resin,

(d) returning the regenerated resin through a second pipeline to the adsorption vessel by using a liquid, preferably demineralised water, with a pressure which is higher in the regeneration vessel and the second pipeline than outside the regeneration vessel and the second pipeline.

2. The process of claim 1, wherein, after step (a) and/or after step (c), the vessel(s) used therein is/are washed with demineralised water until no detectable amount of hydrogen peroxide and/or regenerant is present in the vessel.

3. The process of claim 2, wherein the presence of hydrogen peroxide in the vessel is measured by analysing the density of the washing liquid coming out of the vessel.

4. The process of claim 2 or 3, wherein the washing is carried out at a temperature from 10 to 50 °C, and a pressure from 0.01 barg to 10 barg.

5. The process of any one of the preceding claims, wherein the aqueous hydrogen peroxide solution, before its purification, contains organic impurities in an amount of from 100 to 400 mg/kg measured by using the combustion catalytic oxidation method.

6. The process of any one of the preceding claims, wherein the amount of organic impurities in the purified aqueous hydrogen peroxide solution is from 25 to 150 mg/kg.

7. The process of any one of the preceding claims, wherein the organic impurities are chosen from organic hydrocarbon compounds containing functional groups such as alcohols, aldehydes, carboxylic acids, and alkylated aromatics, in particular diisobutyl carbinol and/or tetra methyl benzene.

8. The process of any one of the preceding claims, wherein step (a) is carried out at a temperature of from 15 to 35 °C, most preferably from 20 to 25 °C.

9. The process of any one of the preceding claims, wherein the amount of hydrogen peroxide in the aqueous hydrogen peroxide solution is from 40 to 55 wt.- %.

10. The process of any one of the preceding claims, wherein the adsorption resin is chosen from non-ion-exchanging adsorbents, preferably polymeric styrene resins cross-linked with divinylbenzene.

11. The process of any one of the preceding claims, wherein the pressure used in step (b) is from 0.1 to 1 barg, for instance 0.5 barg.

12. The process of any one of the preceding claims, wherein the regenerant used in step (c) is chosen from alcohols such as methanol, ethanol, isopropanol, or combinations thereof.

13. The process of any one of the preceding claims, wherein the organic regenerant is used in step(c) in an amount of at least 1 bed volume.

14. The process of any one of the preceding claims, wherein the used regenerant is collected for its distillation and optional reuse in consecutive purification in one or more cycles.

15. The process of any one the preceding claims, wherein the process is carried out in a continuous mode by using at least two sets of adsorption vessel and regeneration vessel for carrying out the process.

**Patentansprüche**

1. Verfahren zur Reinigung einer wässrigen Wasserstoffperoxidlösung, die organische Verunreinigungen enthält, umfassend die folgenden Schritte:

(a) Inkontaktbringen der wässrigen Wasserstoffperoxidlösung mit einem Adsorptionsharz in einem Adsorptionsbehälter, um wenigstens einen Teil der organischen Verunreinigungen zu entfernen und eine gereinigte wässrige Wasserstoffperoxidlösung zu erhalten, die außerhalb des Adsorptionsbehälteres gesammelt wird,
(b) anschließend Zugeben einer Flüssigkeit, vorzugsweise von entmineralisiertem Wasser, in den Adsorptionsbehälter, so dass eine Suspension des Harzes durch eine erste Rohrleitung aus dem Adsorptionsbehälter in einen Regenerationsbehälter fließt, mit einem Druck, der im Adsorptionsbehälter und in der ersten Rohrleitung höher ist als außerhalb des Adsorptionsbehälters und der ersten Rohrleitung;
(c) Behandeln des Harzes in dem Regenerationsbehälter mit einem organischen Regenerationsmittel, um ein regeneriertes Harz zu erhalten,
(d) Rückführen des regenerierten Harzes durch eine zweite Rohrleitung in den Adsorptionsbehälter unter Verwendung einer Flüssigkeit, vorzugsweise von entmineralisiertem Wasser, mit einem Druck, der in dem Regenerationsbehälter und der zweiten Rohrleitung höher ist als außerhalb des Regenerationsbehälters und der zweiten Rohrleitung.

2. Verfahren nach Anspruch 1, wobei nach Schritt (a) und/oder nach Schritt (c) der/die dabei verwendete(n) Behälter mit entmineralisiertem Wasser gewaschen wird/werden, bis keine nachweisbare Menge an Wasserstoffperoxid und/oder Regenerationsmittel in dem Behälter vorhanden ist.

3. Verfahren nach Anspruch 2, wobei das Vorhandensein von Wasserstoffperoxid in dem Behälter durch Analysieren der Dichte der aus dem Behälter austretenden Waschflüssigkeit gemessen wird.

4. Verfahren nach Anspruch 2 oder 3, wobei das Waschen bei einer Temperatur von 10 bis 50 °C und einem Druck von 0,01 barg bis 10 barg durchgeführt wird.

5. Verfahren nach einem der vorstehenden Ansprüche, wobei die wässrige Wasserstoffperoxidlösung vor ihrer Reinigung organische Verunreinigungen in einer Menge von 100 bis 400 mg/kg, gemessen unter Verwendung des katalytischen Verbrennungsoxidationsverfahrens, enthält.

6. Verfahren nach einem der vorstehenden Ansprüche, wobei die Menge an organischen Verunreinigungen in der gereinigten wässrigen Wasserstoffperoxidlösung 25 bis 150 mg/kg beträgt.

7. Verfahren nach einem der vorstehenden Ansprüche, wobei die organischen Verunreinigungen ausgewählt sind aus organischen Kohlenwasserstoffverbindungen, die funktionelle Gruppen enthalten, wie z.B. Alkohole, Aldehyde, Carbonsäuren und alkylierte Aromaten, insbesondere Diisobutylcarbinol und/oder Tetramethylbenzol.

8. Verfahren nach einem der vorstehenden Ansprüche, wobei Schritt (a) bei einer Temperatur von 15 bis 35 °C, höchst bevorzugt von 20 bis 25 °C, durchgeführt wird.

9. Verfahren nach einem der vorstehenden Ansprüche, wobei die Menge an Wasserstoffperoxid in der wässrigen Wasserstoffperoxidlösung von 40 bis 55 Gew.-% beträgt.

10. Verfahren nach einem der vorstehenden Ansprüche, wobei das Adsorptionsharz ausgewählt ist aus nichtionenaustauschenden Adsorptionsmitteln, vorzugsweise polymeren Styrolharzen, die mit Divinylbenzol vernetzt sind.

11. Verfahren nach einem der vorstehenden Ansprüche, wobei der bei Schritt (b) verwendete Druck von 0,1 bis 1 barg, beispielsweise 0,5 barg, beträgt.

12. Verfahren nach einem der vorstehenden Ansprüche, wobei das bei Schritt (c) verwendete Regenerationsmittel aus Alkoholen, wie z.B. Methanol, Ethanol, Isopropanol oder Kombinationen davon, ausgewählt ist.

13. Verfahren nach einem der vorstehenden Ansprüche, wobei das organische Regenerationsmittel bei Schritt(c) in einer Menge von wenigstens 1 Bettvolumen verwendet wird.

14. Verfahren nach einem der vorstehenden Ansprüche, wobei das gebrauchte Regenerationsmittel zu seiner Destillation und optionalen Wiederverwendung bei einer nachfolgenden Reinigung in einem oder mehreren Zyklen gesammelt wird.

**15.** Verfahren nach einem der vorstehenden Ansprüche, wobei das Verfahren in einem kontinuierlichen Modus unter Verwendung von wenigstens zwei Sätzen von Adsorptionsbehältern und Regenerationsbehältern zur Durchführung des Verfahrens durchgeführt wird.

**Revendications**

1. Procédé pour la purification d'une solution aqueuse de peroxyde d'hydrogène contenant des impuretés organiques, comprenant les étapes suivantes :

(a) mise en contact de la solution aqueuse de peroxyde d'hydrogène avec une résine d'adsorption dans une cuve d'adsorption pour éliminer au moins une partie des impuretés organiques et obtenir une solution aqueuse de peroxyde d'hydrogène purifiée qui est recueillie à l'extérieur de la cuve d'adsorption,
(b) ajout subséquemment d'un liquide, de préférence de l'eau déminéralisée, à la cuve d'adsorption de sorte qu'une suspension de la résine s'écoule à l'extérieur de la cuve d'adsorption par l'intermédiaire d'une première conduite dans une cuve de régénération avec une pression qui est plus élevée dans la cuve d'adsorption et la première conduite qu'à l'extérieur de la cuve d'adsorption et de la première conduite ;
(c) traitement de la résine dans la cuve de régénération avec un régénérant organique afin d'obtenir une résine régénérée,
(d) renvoi de la résine régénérée dans la cuve d'adsorption par l'intermédiaire d'une deuxième conduite en utilisant un liquide, de préférence de l'eau déminéralisée, avec une pression qui est plus élevée dans la cuve de régénération et la deuxième conduite qu'à l'extérieur de la cuve de régénération et de la deuxième conduite.

2. Procédé selon la revendication 1, dans lequel, après l'étape (a) et/ou après l'étape (c), la ou les cuves qui y sont utilisées sont lavées avec de l'eau déminéralisée jusqu'à ce qu'aucune quantité détectable de peroxyde d'hydrogène et/ou de régénérant ne soit présente dans la cuve.

3. Procédé selon la revendication 2, dans lequel la présence de peroxyde d'hydrogène dans la cuve est mesurée en analysant la densité du liquide de lavage sortant de la cuve.

4. Procédé selon la revendication 2 ou 3, dans lequel le lavage est effectué à une température de 10 à 50 °C et à une pression de 0,01 barg à 10 barg.

5. Procédé selon l'une quelconque des revendications précédentes, dans lequel la solution aqueuse de peroxyde d'hydrogène, avant sa purification, contient des impuretés organiques en une quantité de 100 à 400 mg/kg mesurée en utilisant le procédé d'oxydation catalytique par combustion.

6. Procédé selon l'une quelconque des revendications précédentes, dans lequel la quantité d'impuretés organiques dans la solution aqueuse de peroxyde d'hydrogène purifiée est de 25 à 150 mg/kg.

7. Procédé selon l'une quelconque des revendications précédentes, dans lequel les impuretés organiques sont choisies parmi les composés hydrocarbonés organiques contenant des groupes fonctionnels tels que les alcools, les aldéhydes, les acides carboxyliques et les composés aromatiques alkylés, en particulier le diisobutylcarbinol et/ou le tétraméthylbenzène.

8. Procédé selon l'une quelconque des revendications précédentes, dans lequel l'étape (a) est effectuée à une température de 15 à 35 °C, de préférence de 20 à 25 °C.

9. Procédé selon l'une quelconque des revendications précédentes, dans lequel la quantité de peroxyde d'hydrogène dans la solution aqueuse de peroxyde d'hydrogène est de 40 à 55 % en poids.

10. Procédé selon l'une quelconque des revendications précédentes, dans lequel la résine d'adsorption est choisie parmi les adsorbants non échangeurs d'ions, de préférence les résines de styrène polymériques réticulées avec un divinylbenzène.

11. Procédé selon l'une quelconque des revendications précédentes, dans lequel la pression utilisée dans l'étape (b) est de 0,1 à 1 barg, par exemple 0,5 barg.

**12.** Procédé selon l'une quelconque des revendications précédentes, dans lequel le régénérant utilisé dans l'étape (c) est choisi parmi les alcools tels que le méthanol, l'éthanol, l'isopropanol ou leurs combinaisons.

**13.** Procédé selon l'une quelconque des revendications précédentes, dans lequel le régénérant organique est utilisé dans l'étape (c) en une quantité d'au moins 1 volume de lit.

**14.** Procédé selon l'une quelconque des revendications précédentes, dans lequel le régénérant utilisé est recueilli pour sa distillation et sa réutilisation éventuelle dans une purification consécutive en un ou plusieurs cycles.

**15.** Procédé selon l'une quelconque des revendications précédentes, dans lequel le procédé est mis en œuvre dans un mode continu en utilisant au moins deux ensembles de cuve d'adsorption et de cuve de régénération pour mettre en œuvre le procédé.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22216112
- US 2158525 A
- US 2215883 A
- EP 0930269 A1
- EP 1520839 A1
- US 6896867 B
- CN 208554226